# EUROPEAN PATENT APPLICATION

(11) **EP 4 446 914 A1**
(43) Date of publication of application: **16.10.2024**
(21) Application number: 21967159.1
(22) Date of filing: 08.12.2021
(51) Int. Cl.: G06F 21/32

(54) **AUTHENTICATION DEVICE, AUTHENTICATION SYSTEM, IMAGE GENERATION METHOD, AND STORAGE MEDIUM**

(71) Applicant: NEC Corporation, 108-8001 Tokyo (JP)
(72) Inventor: SHIMIZU, Masakazu, Tokyo 108-8001 (JP)
(74) Representative: Betten & Resch
(86) International application number: PCT/JP2021/045038
(87) International publication number: WO 2023/105660

(57) **Abstract**

In an authentication device, an input acceptance screen generation means generates an input acceptance screen which includes a first area for displaying a message and receives a tap operation by a target person for a face authentication in the first area or in a second area which is provided separately from the first area. A menu screen generation means generates a menu screen including one or more menu items as a screen after transitioning from the input acceptance screen in response to the tap operation performed to the first area or the second area.

## Description

### TECHNICAL FIELD

The present disclosure relates to a technique of a face authentication.

### BACKGROUND ART

A face authentication is conventionally known as one of authentication techniques used for identification.

Specifically, for example, Patent Document 1 discloses a technique for performing the face authentication using a face image of a user of an image forming device, which is captured by a camera provided in a user interface of the image forming device.

### PRECEDING TECHNICAL REFERENCES

### PATENT DOCUMENT

Patent Document 1: Japanese Laid-open Patent Publication No. 2016-212624

### SUMMARY

### PROBLEM TO BE SOLVED BY THE INVENTION

For example, in a face authentication to determine whether or not to permit entering an area where an admission of a person other than a previously registered person is restricted (hereinafter referred to as a "restricted admission area"), various persons such as children and senior citizens may be subject to the face authentication. Therefore, in the face authentication for determining whether to enter the restricted admission area, it is desirable that a user interface which permits accesses to information corresponding to an authentication state of the face authentication is adopted by a convenient operation. This point is not limited to the face authentication for determining whether to enter a predetermined area, but is the same in the face authentication used for various other applications.

However, Patent Document 1 does not specifically refer to the aforementioned viewpoint. Therefore, according to the technique disclosed in Patent Document 1, there is a problem that operations for accessing the information according to the authentication state of the face authentication becomes complicated.

It is one object of the present disclosure to provide a user interface and a device for accessing information corresponding to the authentication state of the face authentication through the convenient operation.

### MEANS FOR SOLVING THE PROBLEM

According to an example aspect of the present disclosure, there is provided an authentication device including:
an input acceptance screen generation means configured to generate an input acceptance screen which includes a first area for displaying a message and receives a tap operation by a target person for a face authentication in the first area or in a second area which is provided separately from the first area; and
a menu screen generation means configured to generate a menu screen including one or more menu items as a screen after transitioning from the input acceptance screen in response to the tap operation performed to the first area or the second area.

According to another example aspect of the present disclosure, there is provided an authentication system including:
an authentication device according to claim 2; and
a control means configured to perform a control concerning a release of an admission restriction at a predetermined entrance of the restricted admission area in a case where the entering of the restricted admission area is permitted for the target person by the face authentication.

According to still another example aspect of the present disclosure, there is provided an authentication method including:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

According to a further example aspect of the present disclosure, there is provided a storage medium storing a program, the program causing a computer to perform a process including:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

According to a still further example aspect of the present disclosure, there is provided an authentication device for a face authentication of a target person, including:
a touch panel configured to display information concerning an authentication state of the face authentication with respect to the target person;
a thermal sensor configured to detect a body surface temperature of the target person;
a camera configured to acquire an image used for the face authentication by capturing the target person;
a speaker configured to output sound with respect to the target person;
a motion sensor configured to detect presence or absence of the target person; and
a plurality of holes configured to be used for detecting the presence or absence of the target person by the motion sensor and also outputting the sound from the speaker.

### EFFECT OF THE INVENTION

According to the present disclosure, it is possible to provide a user interface and a device for accessing information corresponding to an authentication state of a face authentication through a convenient operation.

### BRIEF DESCRIPTION OF THE DRAWINGS

[FIG. 1] FIG. 1 is a diagram illustrating a configuration of an authentication system according to a first embodiment.
[FIG. 2A] FIG. 2A is a diagram for explaining an appearance of a front side of a terminal device according to the first example embodiment.
[FIG. 2B] FIG. 2B illustrates an example of a case where a rear unit is mounted on a rear side of the terminal device according to the first example embodiment.
[FIG. 2C] FIG. 2C illustrates an example of a case where an extension unit is attached to the rear unit in FIG. 2B.
[FIG. 3] FIG. 3 is a diagram for explaining an installation example of the terminal device according to the first example embodiment.
[FIG. 4] FIG.4 is a diagram for explaining the installation example of the terminal device according to the first example embodiment.
[FIG. 5] FIG.5 is a diagram illustrating an example of a functional configuration of the terminal device according to the first example embodiment.
[FIG. 6] FIG. 6 is a diagram illustrating an example of a functional configuration of a server device according to the first example embodiment.
[FIG. 7] FIG. 7 is a flowchart for explaining a process performed in an authentication system according to the first example embodiment.
[FIG. 8] FIG. 8 is a diagram illustrating an example of a standby screen displayed on the terminal device in accordance with the process in FIG. 7.
[FIG. 9] FIG. 9 is a diagram illustrating an example of a menu screen which can be transitioned from the standby screen in FIG. 8.
[FIG. 10] FIG. 10 is a diagram illustrating an example of an authentication failure screen displayed on the terminal device in accordance with the process in FIG. 7.
[FIG. 11] FIG. 11 is a flowchart for explaining a process performed in an authentication system according to a second example embodiment.
[FIG. 12] FIG. 12 is a diagram illustrating an example of an admission denial screen displayed on the terminal device according to the process in FIG. 11.
[FIG. 13] FIG. 13 is a diagram illustrating an example of a menu screen which can be transitioned from the admission denial screen in FIG. 12.
[FIG. 14] FIG. 14 is a diagram illustrating an example of an admission permission screen displayed on the terminal device according to the process in FIG. 11.
[FIG. 15] FIG. 15 is a diagram illustrating an example of a menu screen which can be transitioned from the admission permission screen in FIG. 14.
[FIG. 16] FIG. 16 is a flowchart for explaining a process performed in an authentication system according to a third example embodiment.
[FIG. 17] FIG. 17 is a diagram illustrating an example of an alert screen displayed on the terminal device according to the process in FIG. 16.
[FIG. 18] FIG. 18 is a diagram illustrating an example of a menu screen which can be transitioned from the alert screen in FIG. 17.
[FIG. 19] FIG. 19 is a diagram illustrating a modification of the standby screen displayed on the terminal device.
[FIG. 20] FIG. 20 is a diagram illustrating a modification of the admission denial screen displayed on the terminal device.
[FIG. 21] FIG. 21 is a diagram illustrating an example of a menu screen which can be transitioned from the admission denial screen in FIG. 20.
[FIG. 22] FIG. 22 is a diagram illustrating a modification of the admission denial screen displayed on the terminal device.
[FIG. 23] FIG. 23 is a diagram illustrating an example of a menu screen which can be transitioned from the admission denial screen in FIG. 22.
[FIG. 24] FIG. 24 is a diagram illustrating an example of the admission denial screen displayed on the terminal device.
[FIG. 25] FIG. 25 is a diagram illustrating an example of a menu screen which can be transitioned from the admission denial screen in FIG. 24_{∘}
[FIG. 26] FIG. 26 is a diagram illustrating an example of the menu screen which can be transitioned from the admission denial screen in FIG. 24.
[FIG. 27] FIG. 27 is a diagram illustrating an example of an admission denial screen displayed on the terminal device.
[FIG. 28] FIG. 28 is a diagram illustrating an example of a menu screen which can be transitioned from the admission denial screen in FIG. 27.
[FIG. 29] FIG. 29 is a block diagram illustrating a functional configuration of an authentication device according to a fourth example embodiment.
[FIG. 30] FIG. 30 is a flowchart for explaining a process performed in the authentication device according to the fourth example embodiment.

### EXAMPLE EMBODIMENTS

In the following, example embodiments will be described with reference to the accompanying drawings.

### <First Example Embodiment>

### [System Configuration]

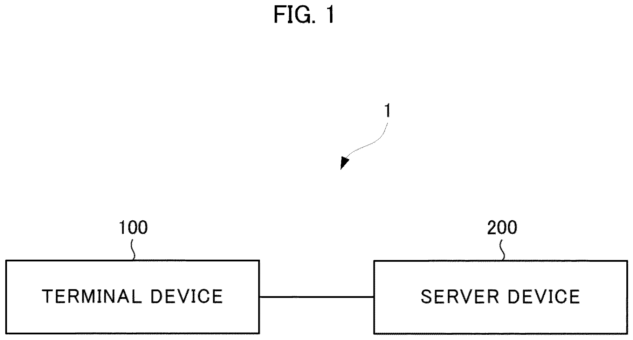

FIG. 1 is a diagram illustrating an example of a configuration of an authentication system according to a first example embodiment.

As illustrated in FIG. 1, an authentication system 1 includes a terminal device 100 and a server device 200.

The terminal device 100 is provided in, for instance, an office building, a conference room, or the like near an entrance leading to an area (restricted admission area) where the entry is restricted except for pre-registered persons. Also, the terminal device 100 acquires matching information used in a face matching process of the server device 200, and transmits the acquired matching information to the server device 200. Moreover, based on the determination result information received after transmitting the matching information (which will be described later), in a case of detecting that the entering of the restricted admission area has been permitted, the terminal device 100 performs a control for opening a door or gate of the entrance leading to the restricted admission area.

The server device 200 performs the face matching process for matching the matching information transmitted from the terminal device 100 with registration information including the registered face image, and acquires, as a process result of the face matching process, determination result information indicating whether to permit entering of the restricted admission area. Moreover, the server device 200 transmits the determination result information acquired as described above to the terminal device 100.

### (Terminal Device)

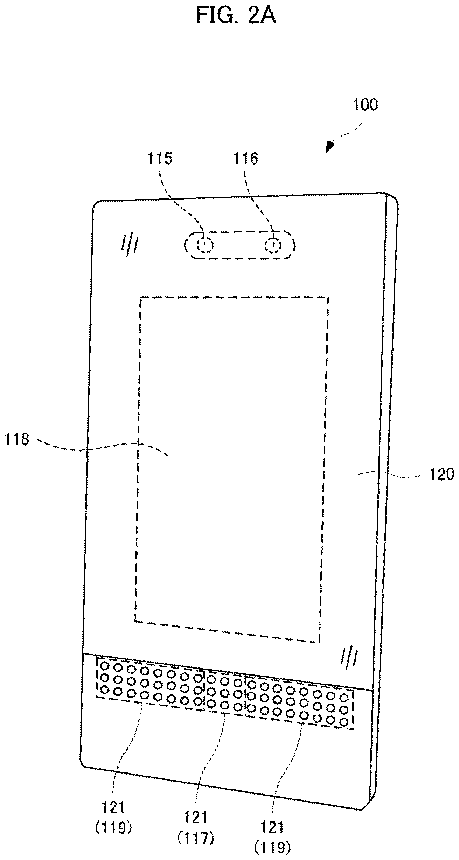

FIG. 2A is a diagram for explaining an appearance of a front side of the terminal device according to the first example embodiment.

As depicted in FIG. 2A, the terminal device 100 is formed as a plate-shaped terminal. Moreover, a portion covered by a transparent cover 120 at the front side of the terminal device 100 is provided with a thermal sensor 115, a camera 116, and a touch panel 118. Furthermore, at a lower portion of the terminal device 100, a motion sensor 117 and a speaker 119, are provided. Also, at the lower portion of the front side of the terminal device 100, a plurality of holes 121 are provided to detect presence or absence of a person by the motion sensor 117, and also output sound from the speaker 119. That is, the plurality of holes 121 contribute to space saving on the front side of the terminal device 100.

The thermal sensor 115 detects a body surface temperature of a person standing in front of or near the terminal device 100. In other words, the thermal sensor 115 detects the body surface temperature of a person entering the restricted admission area.

The camera 116 acquires an image by photographing a person standing in front of or near the terminal device 100. In other words, the camera 116 acquires an image by capturing a person to enter the restricted admission area.

The motion sensor 117 detects the presence or absence of a person in the front or near the terminal device 100. In other words, the motion detection sensor 117 detects the presence or absence of the person entering the restricted admission area. The motion sensor 117 detects infrared rays emitted from a person standing in front of or near the terminal device 100 through at least one hole 121.

The touch panel 118 includes a function as a display unit which displays information related to a procedure of entering the restricted admission area or the like, for a person standing in front of or near the terminal device 100. In addition, the touch panel 118 includes a function as an input unit which can perform instructions and input information by the person standing in front of or near the terminal device 100 through an input interface such as a GUI (Graphical User Interface), for instance.

The speaker 119 outputs sound for a guidance according to the procedure of entering the restricted admission area with respect to the person standing in front of or near the terminal device 100. Moreover, the speaker 119 outputs the sound for the guidance described above through the plurality of holes 121.

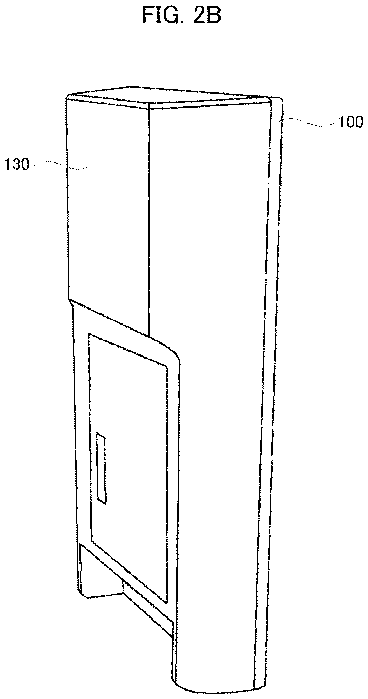

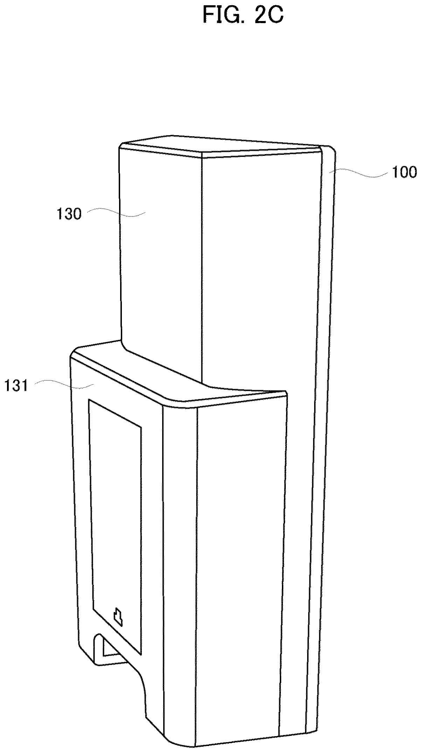

FIG. 2B illustrates an example of a case where a rear unit is mounted on a rear side of the terminal device according to the first example embodiment. FIG. 2C illustrates an example of a case where an extension unit is attached to the rear unit in FIG. 2B.

On the other hand, the rear side of the terminal device 100 is formed to detachably attach the rear unit 130 as depicted in FIG. 2B. Moreover, the rear unit 130 is formed to detachably attach an extension unit 131 as depicted in the FIG. 2C.

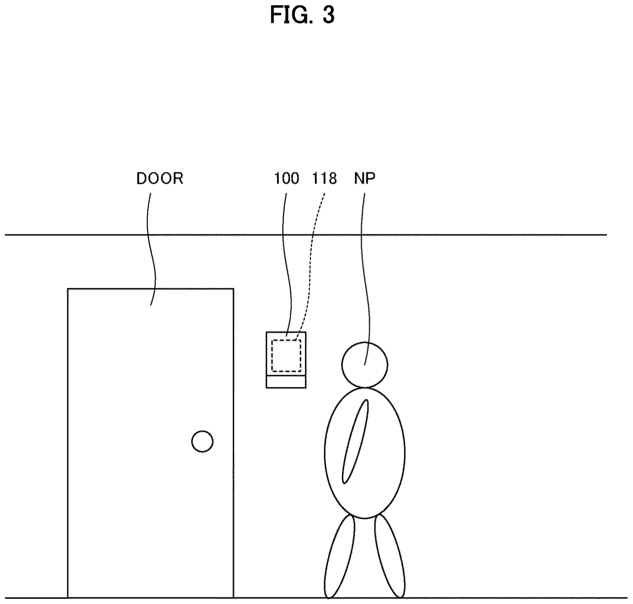

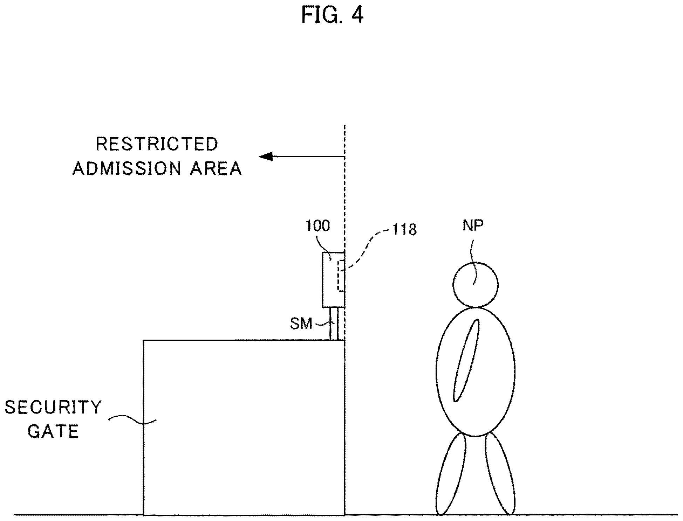

FIG. 3 and FIG. 4 are diagrams for explaining an installation example of the terminal device according to the first example embodiment.

In one example, the terminal device 100 is installed in a position capable of capturing a face of a person NP entering the restricted admission area in a wall near the door leading to the restricted admission area such as a conference room, as depicted in FIG. 3.

In another example, the terminal device 100 is installed while being supported by a support member SM at a security gate leading to the restricted admission area such as an office building, as depicted in FIG. 4. The support member SM is formed in which the orientation and the height of the terminal device 100 can be adjusted so as to be able to capture the face of the person NP.

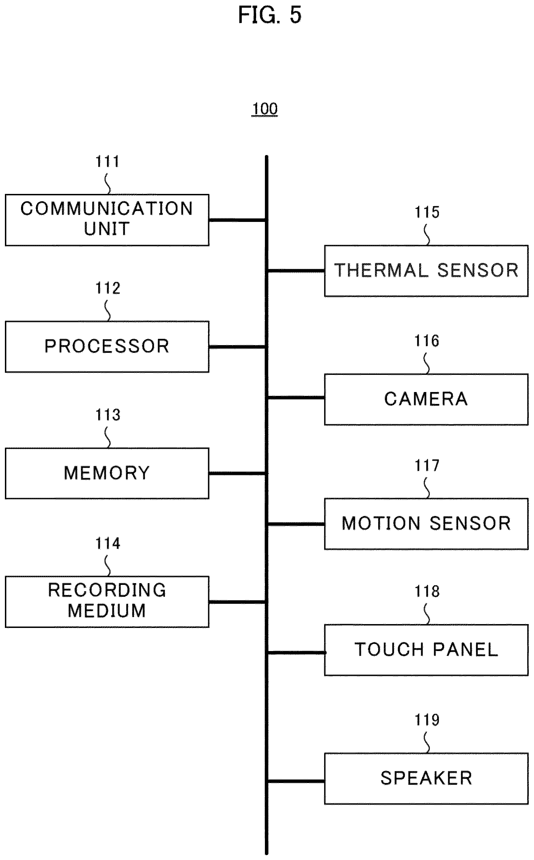

FIG. 5 is a diagram illustrating an example of the functional configuration of the terminal device according to the first example embodiment.

The terminal device 100 includes a communication unit 111, a processor 112, a memory 113, a recording medium 114, the thermal sensor 115, the camera 116, the motion sensor 117, the touch panel 118, and the speaker 119, as depicted in FIG. 5.

The communication unit 111 is formed to communicate with the server device 200. In other words, the communication unit 111 is configured to exchange information and data with the server device 200.

The processor 112 is formed by a CPU (Central Processing Unit) or the like, and controls the entire terminal device 100 by executing programs prepared in advance. Note that the processor 112 may be a GPU (Graphics Processing Unit) or a FPGA (Field-Programmable Gate Array).

The processor 112 performs a face detection process for detecting a face from among images captured by the camera 116. In addition, the processor 112 performs a feature extraction process for extracting the feature amount representing features of eyes, noses, and the like included in a face detected by the face detection process. That is, the processor 112 acquires the extracted feature amount as the matching information by the feature extraction process described above. The matching information acquired by the processor 112 is transmitted to the server device 200 through the communication unit 111.

Incidentally, according to the present example embodiment, the processor 112 can perform a different feature extraction process according to whether or not a mask is worn on the face detected by the face detection process.

Specifically, when the mask is not worn on the face detected by the face detection process, the processor 112 performs a normal feature extraction process for extracting the feature amount from the entire area of the face, for instance. In addition, specifically, for instance, in a case where the mask is worn on the face detected by the face detection process, the processor 112 performs a special feature extraction process in which the feature amount is extracted with emphasis on an area around each eye included in the face.

When detecting a permission of entering the restricted admission area based on the determination result information received in the communication unit 111 after the transmission of the matching information, the processor 112 opens the door or gate of the entrance leading to the restricted admission area. Moreover, the processor 112 maintains the door or gate of the entrance leading to the restricted admission area in a closed state in response to detecting that the entering of the restricted admission area is not permitted, based on the determination result information received by the communication unit 111 after the transmission of the matching information. In addition, during a period from the detection that the entering of the restricted admission area is permitted until a predetermined period of time has elapsed, when the face of the person permitted to enter the restricted admission area is within a field of view of the camera 116, the processor 112 maintains the door or gate of the entrance leading to the restricted admission area in an opened state.

The processor 112 includes functions as an input acceptance screen generation means, a menu screen generation means, and a control means.

The memory 113 is formed by a ROM (Read Only Memory) and a RAM (Random Access Memory). The memory 113 is also used as a working memory during executions of various processes by the processor 112.

The recording medium 114 is a non-volatile and non-transitory recording medium such as a disk-shaped recording medium or a semiconductor memory, and is formed to be detachable from the terminal device 100. Moreover, the recording medium 114 stores various programs executed by the processor 112. When the terminal device 100 performs the various processes, the programs stored in the recording medium 114 are loaded into the memory 113 and executed by the processor 112.

### (Server Unit)

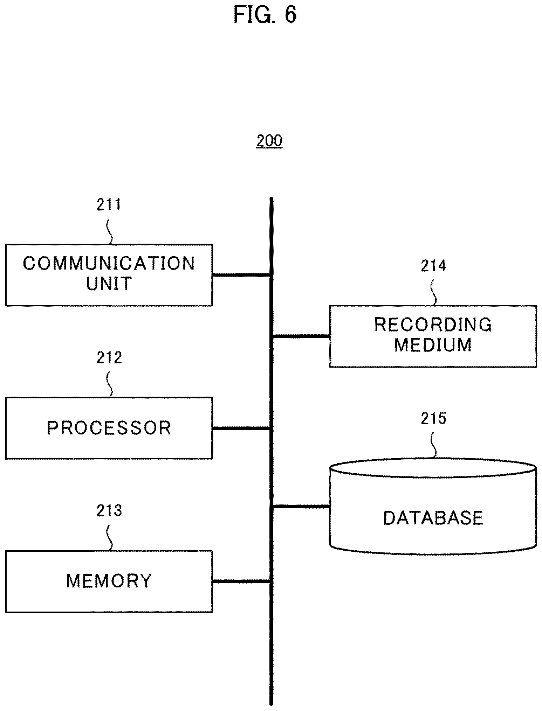

FIG. 6 is a diagram illustrating an example of a functional configuration of the server device according to the first example embodiment.

The server device 200 includes a communication unit 211, a processor 212, a memory 213, a recording medium 214, and a database 215, as illustrated in FIG. 6.

The communication unit 211 is formed to be able to communicate with the terminal device 100. In other words, the communication unit 211 is formed to be able to exchange information and data with the terminal device 100.

The processor 212 is formed by a CPU or the like, and controls the entire server device 200 by executing programs prepared in advance. The processor 212 may be a GPU or a FPGA. The processor 212 performs the face matching process for comparing the matching information received via the communication unit 211 with the registration information including registered face images stored in the database 215. In addition, the processor 212 acquires the determination result information indicating whether or not to permit the entering of the restricted admission area as the process result of the face matching process described above. The determination result information acquired by the processor 212 is transmitted to the terminal device 100 through the communication unit 211.

In the present example embodiment, as the face matching process described above, for instance, a process may be performed to determine whether or not the feature amount included in the matching information and the feature amount extracted from each registered face image are close to each other. Moreover, in the present example embodiment, for instance, when two feature amounts described above are close to each other, the determination result information indicating that to permit the entering of the restricted admission area may be obtained. Furthermore, in the present example embodiment, for instance, in a case where the two feature amounts described above are far from each other, the determination result information indicating that entering of the restricted admission area is not permitted may be obtained.

The memory 213 is formed by a ROM, and a RAM. The memory 213 is also used as a working memory during operations of various processes by the processor 212.

The recording medium 214 is a non-volatile and non-temporary recording medium such as a disk-shaped recording medium or a semiconductor memory, and is formed to be detachable from the server device 200. Moreover, the recording medium 214 stores various programs executed by the processor 212. When the server device 200 executes various processes, the programs stored in the recording medium 214 are loaded into the memory 213 and executed by the processor 212.

The database 215 stores the registration information including the registered face images. In addition, information concerning a person who has a permission to enter the restricted admission area is stored in the database 215 in a state associated with the registration information.

Each registered face image corresponds to an image obtained by capturing the face of the person in a state in which the person, who has the permission to enter the restricted admission area, can be identified. In the present example embodiment, for instance, identification information which can be used to identify a person permitted to enter the restricted admission area, such as an ID number, may be included in the registration information. Moreover, in the present example embodiment, for instance, information concerning a certificate for a vaccination corresponding to a predetermined disease or the like (hereinafter, referred to as a vaccination certificate) may be included in the registration information. In the present example embodiment, for instance, information related to an attribute of the person who has the permission to enter the restricted admission area, such as age, may be included in the registration information. Furthermore, the registration information may include feature amount information extracted from the face image, instead of the face image.

### (Processing Flow)

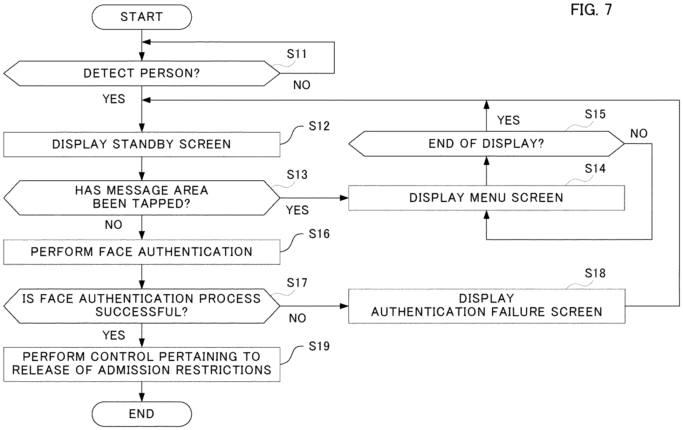

Next, a process performed in the authentication system 1 will be described. FIG. 7 is a flowchart for explaining a process performed in the authentication system according to the first example embodiment.

First, the processor 112 determines whether a person is detected by the motion sensor 117 (step S11).

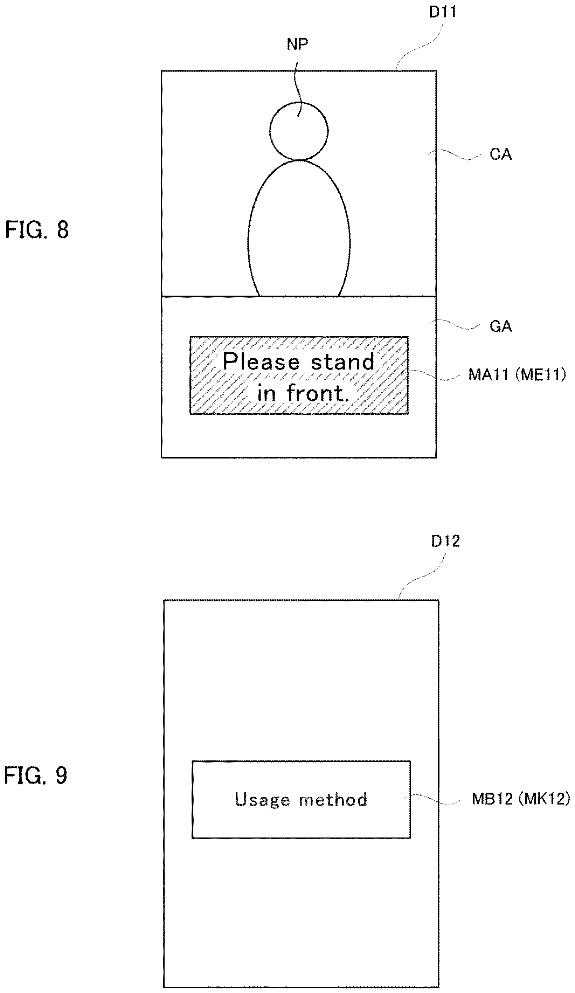

When the person is not detected by the motion sensor 117 (step S11: NO), the processor 112, to maintain the terminal device 100 in a standby state (sleep state). Moreover, when the person is detected by the motion sensor 117 (step S11: YES), the processor 112 transitions the terminal device 100 from the standby state to an activation state, also generates a standby screen D11 as the example in FIG. 8, and displays the standby screen D11 on the touch panel 118 (step S12). FIG. 8 is a diagram illustrating an example of the standby screen displayed on the terminal device in accordance with the process in FIG. 7.

The standby screen D11 is a screen generated in a case where a face authentication process (step S16 described later) for the person NP has not been performed. In other words, the standby screen D11 is a screen which is displayed prior to the face authentication of the person NP. Also, the standby screen D11 is formed as an input acceptance screen having a message area MA11 to be described later. In addition, in the standby screen D11, a camera image area CA and a GUI area GA are provided.

The camera image area CA is formed as an area for displaying a live view of a subject such as the person NP existing within the field of view of the camera 116.

The GUI area GA is formed as an area for displaying phrases indicating states or the like of the terminal device 100 and for displaying an input interface to perform inputs or the like of instructions and information on the terminal device 100. Moreover, the GUI area GA is provided with a message area MA11.

The message area MA11 is an area for displaying a message pertaining to the entering of the restricted admission area. Moreover, the message area MA11 is also formed as an area with a function as a button available for the tap operation by the person NP. That is, the message area MA11 is formed as an area for receiving a tap operation by the person NP who is a target of the face authentication for determining whether or not to permit the entering of the restricted admission area. In addition, a message ME11 corresponding to a phrase "Please stand in front." is displayed in the message area MA11.

The processor 112 determines whether or not the tap operation on the message area MA11 has been performed within a certain period of time (step S13).

When the tap operation is performed on the message area MA11 within a predetermined period (step S13: YES), the processor 112 generates a menu screen D12 as illustrated in FIG. 9, and displays the menu screen D12 on the touch panel 118 (step S14). FIG. 9 is a diagram illustrating an example of a menu screen which can be transitioned from the standby screen in FIG. 8.

The menu screen D12 is the screen after transitioning from the standby screen D11 in response to the tap operation on the message area MA11. In addition, a button area MB12 is provided on the menu screen D12.

The button area MB12 is an area for displaying a menu item pertaining to any of the standby screen D11 and the message ME11, that is, the menu item according to the state prior to the face authentication process. Moreover, the button area MB 12 is formed as an area having a function as a button available for the tap operation by the person NP. In addition, the button area MB12 of the menu item corresponding to a phrase "Usage method" is displayed in the button area MK12.

For instance, in a case where the tap operation is performed on the button area MB 12, the processor 112 generates a screen for explaining a usage method of the terminal device 100, and displays the screen on the touch panel 118.

The processor 112 determines whether or not an instruction has been made to terminate the display of the menu screen D12 by the tap operation or the like with respect to an area other than the button area MB12 in the menu screen D12, for instance (step S15).

When the instruction is made to terminate the display of the menu screen D12 (step S15: YES), the processor 112 displays the standby screen D11 again (step S12). In addition, when the instruction has not been performed to terminate the display of the menu screen D12 (step S15: NO), the processor 112 maintains the display of the menu screen D12 (step S14). Note that, according to the present example embodiment, the processor 112 may display the standby screen D11 again when the tap operation on the button area MB12 has not been performed within a certain period of time after the menu screen D12 is started.

On the other hand, when the tap operation on the message area MA11 has not been performed within a certain period of time (step S13:NO), the face authentication process, which corresponds to a series of processes including the face authentication process by the processor 112, the feature extraction process by the processor 112, and the face matching process by the processor 212, is performed (step S16).

The processor 112 determines whether or not the face authentication process is successful, based on the determination result information obtained as a process result of step S16 (step S17).

Specifically, for instance, when the determination result information indicating the authentication error is obtained due to the fact that the face of the person NP cannot been detected from the image captured by the camera 116, the processor 112 determines that the face authentication process has failed. Also, the processor 112 determines that the face authentication process has succeeded when the determination result information, which indicates whether to permit the person NP to enter the restricted admission area, is obtained.

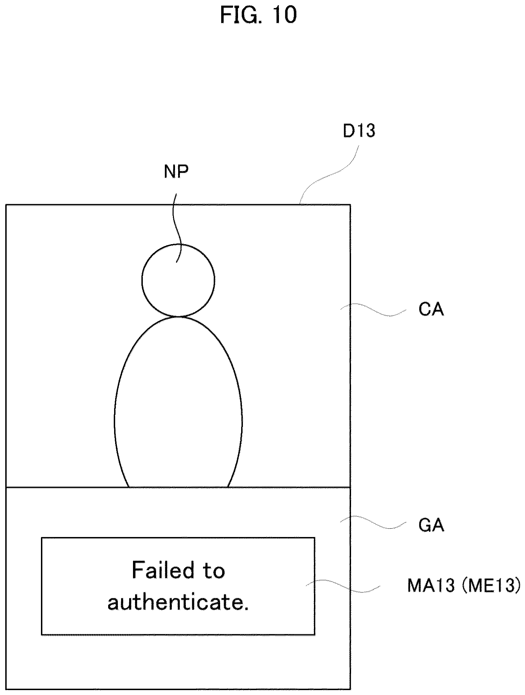

When it is determined that the face authentication process fails (step S17: NO), the processor 112 generates an authentication failure screen D13 illustrated in FIG. 10, and displays the authentication failure screen D13 on the touch panel 118 (step S18). The authentication failure screen D13 is a screen displayed when the face authentication of the person NP has failed. In addition, the processor 112 displays the standby screen D11 again (step S12) after a certain period of time has elapsed from a start of displaying the authentication failure screen D13. FIG. 10 is a diagram illustrating an example of the authentication failure screen displayed on the terminal device in accordance with the process in FIG. 7.

The authentication failure screen D13 corresponds to a screen with a message area MA13, instead of the message area MA11 on the standby screen D11.

The message area MA13 is an area for displaying a message pertaining to the entering of the restricted admission area. In addition, the message area MA13 displays the message ME13 corresponding to a phrase "Failed to authenticate.".

When it is determined that the face authentication process is successful (step S17: YES), the processor 112 performs a control for releasing an admission restriction at a predetermined entrance of the restricted admission area (the entrance where the terminal device 100 is installed) (step S19).

Specifically, the processor 112 performs, for instance, a control for unlocking the door of the predetermined entrance or a control for opening the gate of the predetermined entrance, as a control for releasing the admission restriction at the predetermined entrance of the restricted admission area.

The processor 112 terminates the series of processes illustrated in FIG. 7 after performing the process (control) in step S19. Moreover, after the series of processes depicted in FIG. 7 is completed, when the person is no longer detected by the motion sensor 117 or when a certain period of time has elapsed, the processor 112 transitions the terminal device 100 from a start state to the standby state.

According to the present example embodiment, for instance, the processor 112 may display another screen D1X in which at least a part of the standby screen D11 is changed while the face authentication process in step S16 is being performed. Moreover, according to the present example embodiment, the processor 112 may display the menu screen D1Y which can be transitioned from the aforementioned screen D1X, for instance. That is, according to the present example embodiment, the processor 112 may generate a different screen corresponding to the authentication state of the face authentication on the person NP and display the different screens on the touch panel 118.

As described above, according to the present example embodiment, in a case where the tap operation is performed on the message area or the button area provided in the input acceptance screen, the menu screen including one or more menu items can be generated and displayed on the touch panel 118. Therefore, according to the present example embodiment, by a simple operation, it is possible to provide a user interface capable of accessing information corresponding to the authentication state of the face authentication.

### <Second Example Embodiment>

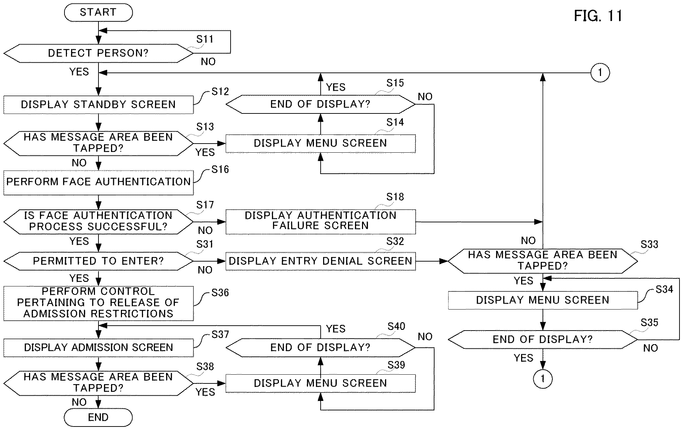

FIG. 11 is a flowchart for explaining a process performed in an authentication system according to a second example embodiment.

Note that the present example embodiment, the process will be described assuming that the process is performed in the authentication system having the same functional configuration and hardware configuration as each unit of the authentication system 1 according to the first example embodiment. Moreover, in the present example embodiment, while the process or the like, which is performed after the face authentication process is determined to be successful by step S17, is different from that in the first example embodiment, other parts are the same as those in the first example embodiment. Therefore, in the present example embodiment, among the processes depicted in FIG. 11, the process of step S31 to step S40 will be described in detail, while the explanations of the process of step S11 to S18 are omitted.

When it is determined that the face authentication process is successful (step S17: YES), the processor 112 determines whether or not the person NP is permitted to enter the restricted admission area, based on the determination result information obtained as the process result of step S16 (step S31).

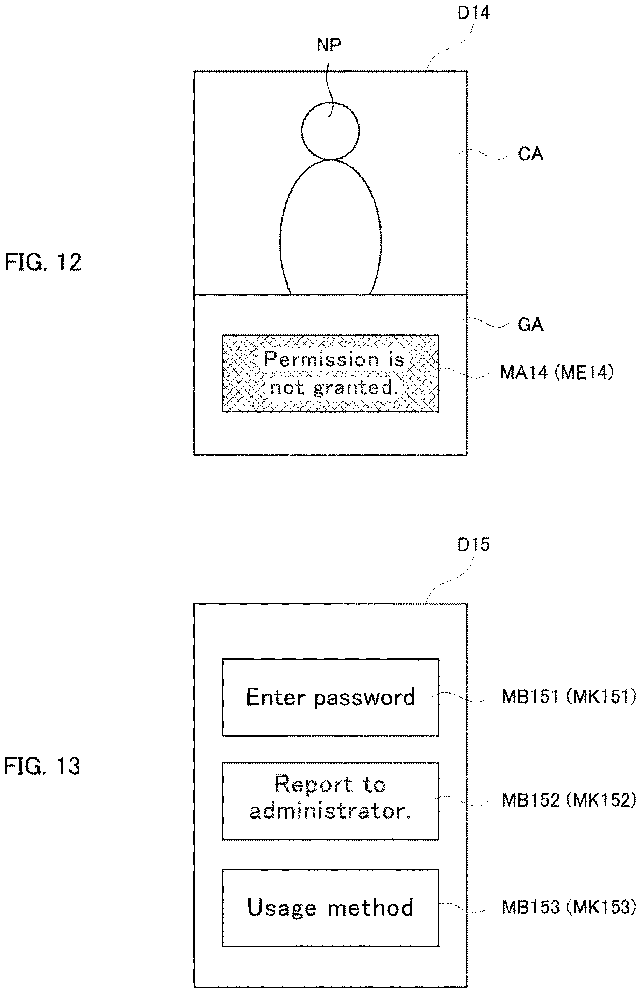

When the person NP is not permitted to enter the restricted admission area (step S31: NO), the processor 112 generates an admission denial screen D14 as illustrated in FIG. 12 and displays the admission denial screen D14 on the touch panel 118 (step S32). FIG. 12 is a diagram illustrating an example of an admission denial screen displayed on the terminal device according to the process in FIG. 11.

The admission denial screen D14 corresponds to a screen in which a message area MA14 is provided instead of the message area MA11 on the standby screen D11. In other words, the admission denial screen D14 is formed as an input acceptance screen having the message area MA14.

The message area MA14 is an area for displaying a message pertaining to the entering of the restricted admission area. Also, the message area MA14 is formed as an area with a function as a button available for the tap operation by the person NP. That is, the message area MA14 is formed as an area for receiving the tap operation by the person NP who is the target of the face authentication for determining whether or not to permit the entering of the restricted admission area. In addition, in the message area MA14, a message ME14 corresponding to a phrase "Permission not granted." is displayed as a message for informing the person NP that the permission to the entering of the restricted admission area has not been granted.

The processor 112 determines whether or not the tap operation on the message area MA14 has been performed (step S33).

When the tap operation is performed on the message area MA14 within a certain period of time (step S33: YES), the processor 112 generates a menu screen D15 as illustrated in FIG. 13, and displays the touch panel 118 (step S34). Moreover, when the tap operation has not been performed on the message area MA14 within the certain period of time (step S33: NO), the processor 112 displays the standby screen D11 again (step S12). FIG. 13 is a diagram illustrating an example of a menu screen which can be transitioned from the admission denial screen in FIG. 12.

The menu screen D15 is a screen after transitioning from the admission denial screen D14 in response to the tap operation on the message area MA14. In addition, the menu screen D15 corresponds to a screen in which button areas MB 151, MB 152 and MB 153 are provided, instead of the button area MB 12 in the menu screen D12.

The button areas MB151, MB152 and MB153 are areas for displaying menu items concerning any of the admission denial screen D14 and the message ME14, that is, the menu items according to a state in which it is not possible to enter the restricted admission area in accordance with the face authentication. Moreover, the button areas MB 151, MB 152 and MB 153 are formed as areas having respective functions as buttons available for the tap operation by the person NP. In addition, the button area MK151 of the menu item corresponding to a phrase "Enter password" is displayed in the button area MB 151. Furthermore, the button area MB 152 displays the menu item MK152 corresponding to the phrase "Report to administrator.". Also, the button area MK153 of the menu item corresponding to the phrase "Usage method" is displayed in the button area MB 153. That is, the menu screen D15 corresponds to a screen which includes a menu item enable to perform other authentication methods which differ from the face authentication.

Accordingly, for instance, when the tap operation is performed on the button area MB153, the processor 112 generates a screen prompting the person NP to enter the password, and displays the screen on the touch panel 118. Moreover, for instance, in response to the tap operation on the button area MB152, the processor 112 generates a screen capable of reporting to the administrator of a facility that the entering of the restricted admission area is not permitted, and displays the screen on the touch panel 118. Furthermore, for instance, when the tap operation is performed on the button area MB153, the processor 112 generates a screen for explaining the use method of the terminal device 100, and displays the screen on the touch panel 118.

Note that, according to this example embodiment, in the menu screen D15, a button area may be provided to perform authentication by a method other than the entering of the password.

For instance, the processor 112 determines whether or not an instruction to terminate the display of the menu screen D15 has been made by the tap operation or the like with respect to an area other than the button areas MB151, MB152, and MB 153 (step S35).

When the instruction is made to terminate the display of the menu screen D15 (step S35: YES), the processor 112 displays the standby screen D11 again (step S12). In addition, when the instruction has not been performed to terminate the display of the menu screen D15 (step S35: NO), the processor 112 maintains the display of the menu screen D15 (step S34). According to the present example embodiment, the processor 112 may display the standby screen D11 again when the tap operations is not performed for any one of the button areas MB151, MB152 and MB 153 within a certain period of time after the menu screen D15 has been started.

On the other hand, when the person NP is permitted to enter the restricted admission area (step S31: YES), the processor 112 performs a control according to a release of the admission restriction at the predetermined entrance of the restricted admission area (the entrance where the terminal device 100 is installed) (step S36).

Specifically, the processor 112 performs, for instance, a control for unlocking the door of the predetermined entrance, or a control for opening the gate of the predetermined entrance, as a control according to the release of the admission restriction at the predetermined entrance of the restricted admission area.

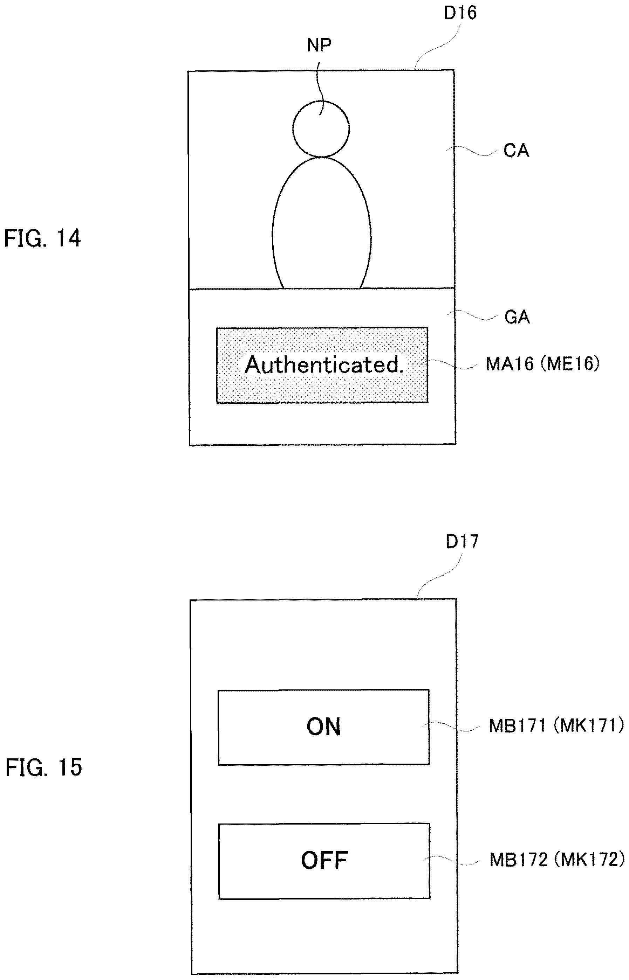

After performing the control of step S36, the processor 112 generates an admission permission screen D16 as illustrated in FIG. 14, and displays the admission permission screen D16 on the touch panel 118 (step S37). The admission permission screen D16 is a screen displayed when the face authentication of the person NP is successful. FIG. 14 is a diagram illustrating an example of an admission permission screen displayed on the terminal device according to the process in FIG. 11.

The admission permission screen D16 corresponds to a screen in which a message area MA16 is provided, instead of the message area MA11 on the standby screen D11. In other words, the admission permission screen D16 is formed as an input acceptance screen having the message area MA16.

The message area MA16 is an area for displaying a message pertaining to the entering of the restricted admission area. Also, the message area MA16 is formed as an area with a function as a button available for the tap operation by the person NP. That is, the message area MA16 is formed as an area for receiving the tap operation by the person NP who is the target of the face authentication for determining whether or not to permit the entering of the restricted admission area. In addition, the message area MA16 displays a message ME16 corresponding to the phrase "Authenticated. ".

The processor 112 determines whether or not the tap operation on the message area MA16 is performed (step S38).

When the tap operation on the message area MA16 is performed within a certain period of time (step S38: YES), the processor 112 generates a menu screen D17 as illustrated in FIG. 15, and displays the menu screen D17 on the touch panel 118 (step S39). FIG. 15 is a diagram illustrating an example of a menu screen which can be transitioned from the admission permission screen in FIG. 14.

The menu screen D17 is a screen after transitioning from the admission permission screen D16 in response to the tap operation on the message area MA16. In addition, the menu screen D17 corresponds to a screen in which button areas MB171 and MB172 are provided instead of the button area MB12 in the menu screen D12.

The button areas MB171 and MB 172 are areas for displaying menu items concerning any of the admission permission screen D16 and the message ME16, that is, the menu items corresponding to a state in which it becomes possible to enter the restricted admission area by the face authentication. Moreover, the button areas MB171 and MB172 are formed as areas having respective functions as buttons available for the tap operation by the person NP. In addition, in the button area MB171, a menu item MK171 corresponding to a word "ON" is displayed. In addition, in the button area MB172, a menu item MK172 corresponding to a word "OFF" is displayed.

Next, for instance, when the tap operation is performed on the button area MB171, the processor 112 performs a control for turning on light or the like in the room which is set as the restricted admission area. Moreover, for instance, in a case where the tap operation is performed on the button area MB172, the processor 112 performs a control for turning off the light or the like of the room which is set as the restricted admission area.

For instance, the processor 112 determines whether or not an instruction to terminate the display of the menu screen D17 is made by the tap operation or the like to an area other than the button areas MB 172 and MB 171 in the menu screen D17 (step S40).

When the instruction is made to terminate the display of the menu screen D17 (step S40: YES), the processor 112 re-displays the admission permission screen D16 (step S37). In addition, when the instruction has not been performed to terminate the display of the menu screen D17 (step S40: NO), the processor 112 maintains the display of the menu screen D17 (step S39). According to the present example embodiment, when the tap operation has not been performed to any one of the button areas MB171 and MB172 within a certain period of time after the menu screen D17 is started, the processor 112 may display the admission permission screen D16 again.

On the other hand, when the tap operation on the message area MA14 has not been performed within the certain period of time (step S38: NO), the processor 112 terminates the series of processes depicted in FIG. 11. Moreover, when the person is no longer detected by the motion sensor 117 or when a predetermined time has elapsed after the series of processes depicted in FIG. 11 is completed, the processor 112 transitions the terminal device 100 from the start state to the standby state.

That is, according to the process described above, it is possible for the processor 112 to generate a different screen corresponding to the authentication state of the face authentication on the person NP, and display a different screen on the touch panel 118 as the input acceptance screen. In addition, according to (the first example embodiment and) the present example embodiment, for instance, the authentication states of the aforementioned face authentication include four states as a pre-authentication state (not performed), a state during the authentication, a state in which the authentication fails, and a state in which the authentication is successful.

Note that, according to the present example embodiment, when the face of the person NP is within the field of view of the camera 116 until the predetermined time elapses after the process of step S31, the processor 112 may perform the processes of step S39 and step S40 as necessary while repeating the processes of step S37 and step S38.

As described above, according to the present example embodiment, when a tap operation is performed on the message area or the button area provided in the input acceptance screen, it is possible to generate a menu screen including one or more menu items and display the menu screen on the touch panel 118. Therefore, according to the present example embodiment, by a simple operation, it is possible to provide the user interface capable of accessing information corresponding to the authentication state of the face authentication.

### <Third Example Embodiment>

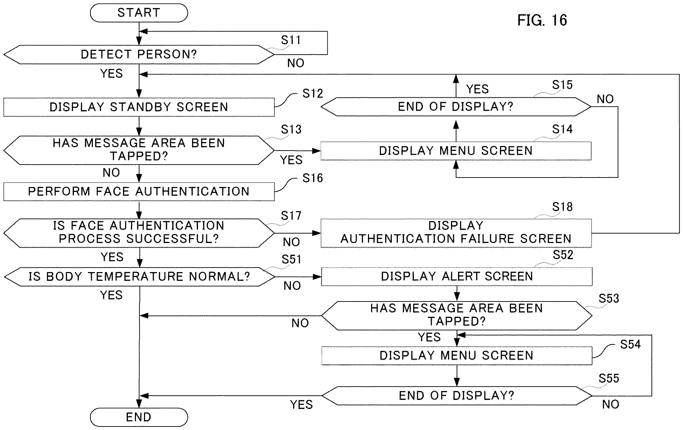

FIG. 16 is a flowchart for explaining a process performed in an authentication system according to the third example embodiment.

In the present example embodiment, the process will be described assuming that the process is performed in the authentication system having the same functional configuration and hardware configuration as each unit of the authentication system 1 according to the first example embodiment. Moreover, in the present example embodiment, while the process or the like, which is performed after the face authentication process is determined to be successful in step S17, is different from that in the first example embodiment, other parts are the same as those in the first example embodiment. Therefore, in the present example embodiment, among the processes depicted in FIG. 16, the processes of step S51 to step S55 will be described in detail, while the explanations of the processes of steps S11 to S18 are omitted.

When it is determined that the face authentication process is successful (step S17: YES), the processor 112 determines whether or not a body temperature of the person NP is normal based on the body surface temperature of the person NP detected by the thermal sensor 115 (step S51).

When the body surface temperature of the person NP is lower than the predetermined value, the processor 112 determines that the body temperature of the person NP is normal (step S51: YES), and terminates a series of processes in FIG. 16. Moreover, after the series of processes depicted in FIG. 16 is completed, when the person is no longer detected by the motion sensor 117 or when a predetermined time has elapsed, the processor 112 transitions the terminal device 100 from the start state to the standby state.

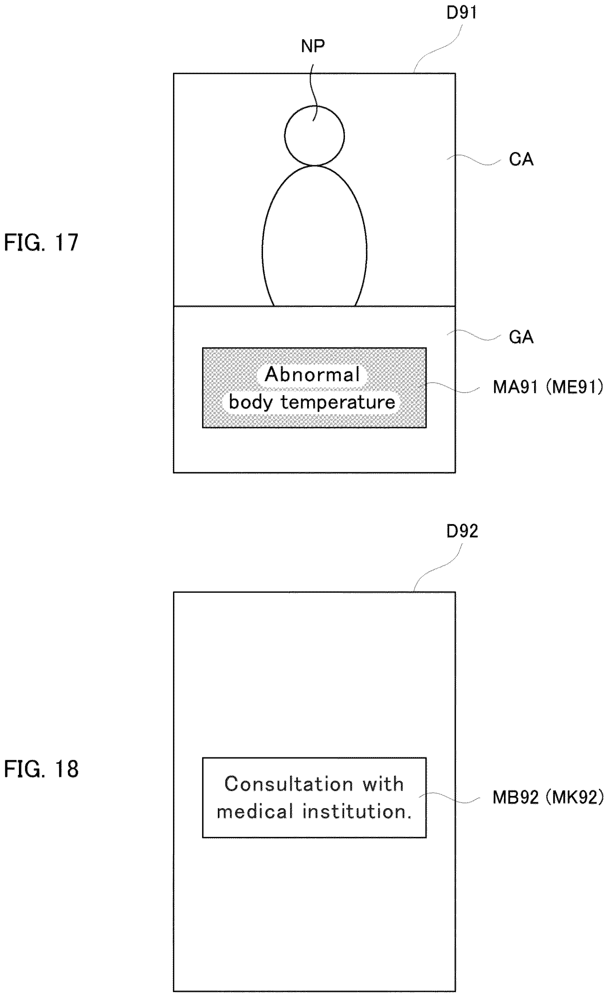

When the body surface temperature of the person NP is equal to or more than the predetermined value, the processor 112 determines that the body temperature of the person NP is abnormal (step S51:NO), generates an alert screen D91 as illustrated in FIG. 17, and displays the alert screen D91 on the touch panel 118 (Step S52). FIG. 17 is a diagram illustrating an example of the alert screen displayed on the terminal device according to the process in FIG. 16.

The alert screen D91 corresponds to a screen in which a message area MA91 is provided, instead of the message area MA11 on the standby screen D11. In other words, the alert screen D91 is formed as an input acceptance screen having the message area MA91.

The message area MA91 is an area for displaying a message pertaining to the state of the person NP. Also, the message area MA91 is formed as an area with a function as a button available for the tap operation by the person NP. That is, the message area MA91 is formed as an area for receiving the tap operation by the person NP to be a subject to the face authentication. In addition, the message area MA91 displays a message ME91 corresponding to a phrase "Abnormal body temperature" as a message to report the person NP that the body temperature is abnormal.

The processor 112 determines whether or not the tap operation on the message area MA91 has been performed (step S53).

When the tap operation is performed on the message area MA91 within a certain period of time (step S53: YES), the processor 112 generates a menu screen D92 as depicted in FIG. 18, and displays the menu screen D92 on the touch panel 118 (step S54). Moreover, when the tap operation on the message area MA91 has not been performed within the certain period of time (step S53: NO), the processor 112 terminates the series of processes depicted in FIG. 16. Furthermore, the processor 112, after the series of processes depicted in FIG. 16 is completed, when the person is no longer detected by the motion sensor 117, or when a predetermined time has elapsed, the terminal device 100 transitions from the start state to the standby state. FIG. 18 is a diagram illustrating an example of the menu screen which can be transitioned from the alert screen in FIG. 17.

The menu screen D92 is a screen after transitioning from the alert screen D91 in response to the tap operation on the message area MA91. Also, the menu screen D92 corresponds to a menu in which a button area MB92 is provided, instead of the button area MB 12 of the menu screen D12.

A button area MB92 is an area for displaying a menu item pertaining to any of the alert screen D91 and the message ME91, that is, the menu item corresponding to a state in which the body temperature abnormality is confirmed after the face authentication. Moreover, the button area MB92 is formed as an area having a function as a button available for the tap operation by the person NP. In addition, the button area MB92 displays a menu item MK92 corresponding to a phrase "Consultation with medical institution.".

For instance, when the tap operation is performed on the button area MB92, the processor 112 generates a screen for guiding a medical institution to consult near an installation location of the terminal device 100, and displays the screen on the touch panel 118.

The processor 112 determines whether or not an instruction has been made to terminate the display of the menu screen D92 by the tap operation or the like to an area other than the button area MB92 in the menu screen D92, for instance (step S55).

When the instruction is made to terminate the display of the menu screen D92 (step S55: YES), the processor 112 terminates the series of processes in FIG. 16. Moreover, after completion of the series of processes depicted in FIG. 16, when the person is no longer detected by the motion sensor 117 or when a predetermined time has elapsed, the processor 112 transitions the terminal device 100 from the start state to the standby state. On the other hand, when the instruction has not been performed to terminate the display of the menu screen D92 (step S55: NO), the processor 112 maintains the display of the menu screen D92 (step S54).

According to the present example embodiment, for instance, when it is determined that the body temperature of the person NP is normal, the processor 112 may display another screen D9X in which at least a part of the alert screen D91 is changed. In addition, according to the present example embodiment, the processor 112 may display a menu screen D9Y which can be transitioned from the aforementioned screen D9X, for instance. That is, according to the present example embodiment, the processor 112 may generate a different screen according to whether or not the body temperature of the person NP is normal and display the different screen on the touch panel 118 as the input acceptance screen in which the face authentication of the person NP has succeeded.

As described above, according to the present example embodiment, when the tap operation is performed on the message area or the button area provided in the input acceptance screen, the menu screen including one or more menu items can be generated and displayed on the touch panel 118. Therefore, according to the present example embodiment, by a simple operation, it is possible to provide the user interface capable of accessing information corresponding to the authentication state of the face authentication.

### [Modifications]

Hereinafter, modifications to the above example embodiment will be described. Note that, for the sake of simplicity, an explanation of a part to which the above-described process or the like can be applied is omitted in the following.

### (Modification 1)

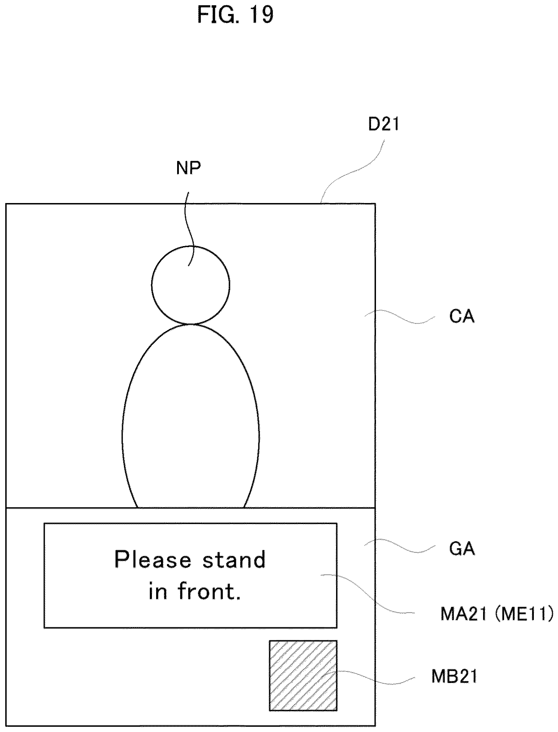

FIG. 19 is a diagram illustrating a modification of the standby screen displayed on the terminal device.

In step S12, the processor 112 may generate a standby screen D21 as depicted in FIG. 19, and display the standby screen D21 on the touch panel 118, instead of the standby screen D11 depicted in FIG. 8.

The standby screen D21 corresponds to the standby screen D11 in which a message area MA11 is provided, instead of a message area MA21 of the standby screen D11, and a button area MB21 is additionally provided in the GUI area GA of the standby screen D11. In other words, the standby screen D21 is formed as an input acceptance screen having the button area MB21.

The message area MA21 is an area for displaying a message pertaining to the entering of the restricted admission area. The message ME11 which is the same as that in the standby screen D11 is displayed in the message area MA21.

The button area MB21 is formed as an area having a function as a button available for the tap operation by the person NP. That is, the button area MB21 is an area provided separately from the message area MA21, and is formed as an area for receiving the tap operation by the person NP who is the target of the face authentication for determining whether or not to permit the entering of the restricted admission area.

According to the screen configuration of the standby screen D21 as described above, for instance, when the tap operation is performed on the button area MB21 within a certain period of time, it is possible for the processor 112 to generate and display the menu screen D12 on the touch panel 118. Moreover, according to the screen configuration of the standby screen D21 as described above, for instance, when the tap operation is not performed on the button area MB21 within the certain period of time, the face authentication process corresponding to the process in step S16 is performed.

Note that, a display mode of the standby screen D21 illustrated in FIG. 19 can be similarly applied to the admission permission screen D14 and the admission permission screen D16.

Moreover, according to the standby screen D21 illustrated in FIG. 19, a plurality of button areas may be provided in the GUI area GA.

Furthermore, according to the standby screen D21 illustrated in FIG. 19, instead of the button area MB21, the button area MB12 of the menu screen D12 may be provided.

### (Modification 2)

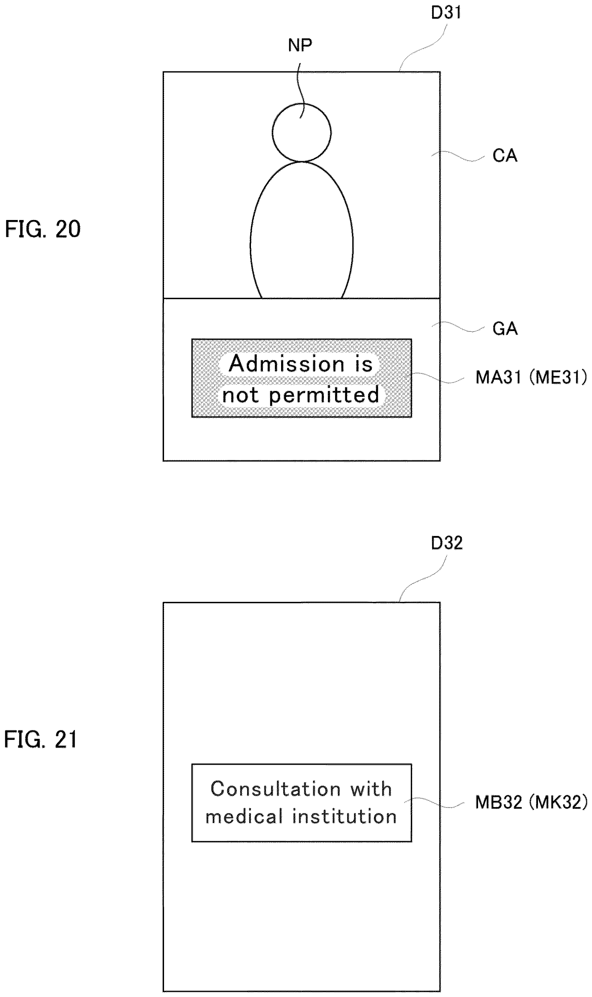

FIG. 20 is a diagram illustrating a modification of the admission denial screen displayed on the terminal device.

For instance, immediately after step S31, the processor 112 may determine whether or not the body surface temperature of the person NP detected by the thermal sensor 115 is equal to or higher than a predetermined value. When determining that the body surface temperature of the person NP detected by the thermal sensor 115 is equal to or higher than a predetermined value, the processor 112 may estimate that the person NP is in a poor physical condition, and generate an admission denial screen D31 as depicted in FIG. 20 so that the admission denial screen is displayed on the touch panel 118. Also, the processor 112 may perform the process (control) of step S36 when the surface temperature of the person NP detected by the thermal sensor 115 is lower than the predetermined value.

The admission denial screen D31 corresponds to a screen in which a message area MA31 is provided, instead of the message area MA14 of the admission denial screen D14. In other words, the admission denial screen D31 is formed as an input acceptance screen having the message area MA31.

The message area MA31 is an area for displaying a message pertaining to the entering of the restricted admission area. Also, the message area MA31 is formed as an area with a function as a button available for the tap operation by the person NP. In addition, the message area MA31 displays a message ME31 corresponding to a phrase "Admission is not permitted." as a message to inform the person NP that the entering of the restricted admission area is not permitted.

According to the screen configuration of the admission denial screen D31 as described above, for instance, when the tap operation is performed on the message area MA31 within a predetermined time, the processor 112 can generate a menu screen D32 as depicted in FIG. 21, and display the menu screen D32 on the touch panel 118. FIG. 21 is a diagram illustrating an example of a menu screen which can be transitioned from the admission denial screen in FIG. 20.

The menu screen D32 is a screen after transitioning from the admission denial screen D31 in response to the tap operation on the message area MA31. The menu screen D32 corresponds to a button area MB32, instead of the button area MB12 of the menu screen D12.

The button area MB32 is an area for displaying a menu item pertaining to any of the admission denial screen D31 and the message ME31, that is, the menu item pertaining to a state in which the admission is not granted due to fever despite passing the face authentication. Moreover, the button area MB32 is formed as an area having a function as a button available for the tap operation by the person NP. In addition, the button area MB32 displays a menu item MK32 corresponding to a phrase "Consultation with medical institution.".

And, for instance, when the tap operation is performed on the button area MB32, the processor 112 generates a screen for guiding the medical institution available for consultation near the installation location of the terminal device 100, and displays the screen on the touch panel 118.

According to the present modification, for instance, when recognizing that the image obtained by the camera 116 includes the vaccination certificate, the processor 112 may perform the process (control) in step S36, without performing the process for determining whether or not to permit the entering of the restricted admission area based on the body surface temperature detected by the thermal sensor 115.

### (Modification 3)

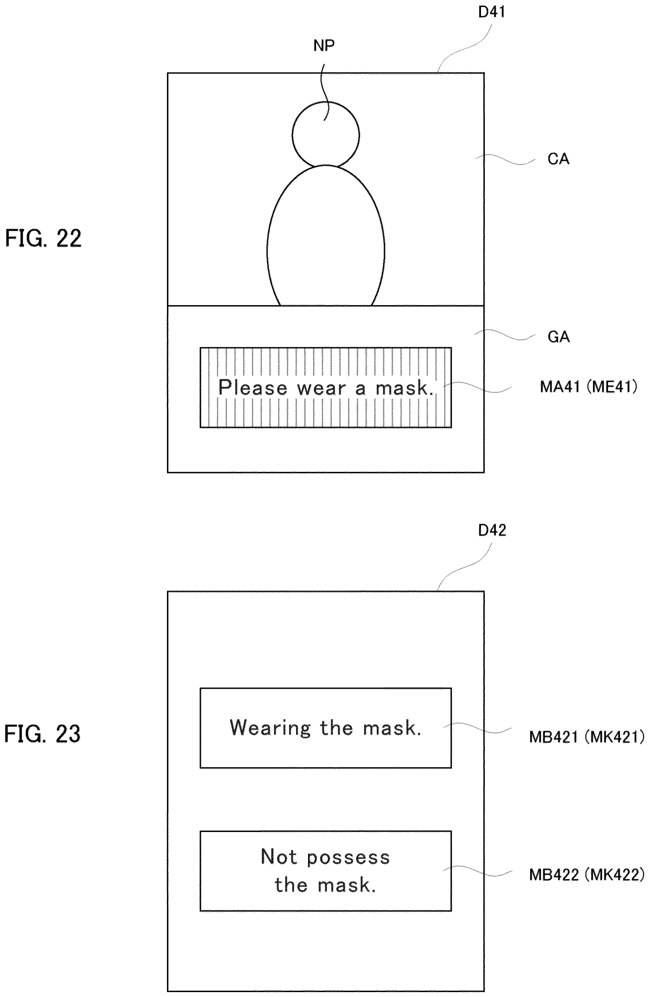

FIG. 22 is a diagram illustrating a modification of the admission denial screen displayed on the terminal device.

For instance, the processor 112 may, immediately after step S31, determine whether the person NP is wearing a mask. When determining that the person NP is not wearing the mask, the processor 112 may generate an admission denial screen D41 as depicted in FIG. 22, and display the admission denial screen D41 on the touch panel 118.

The admission denial screen D41 corresponds to a screen in which a message area MA41 is provided, instead of the message area MA14 of the admission denial screen D14. In other words, the admission denial screen D41 is formed as an input acceptance screen having the message area MA41.

The message area MA41 is an area for displaying messages pertaining to the entering of the restricted admission area. Also, the message area MA41 is formed as an area with a function as a button available for the tap operation by the person NP. Moreover, the message area MA41 displays a message ME41 corresponding to a phrase "Please wear a mask." as a message to urge the person NP who enters the restricted admission area to wear the mask.

According to the screen configuration of the admission denial screen D41 as described above, for instance, in a case where the tap operation on the message area MA41 is performed within a certain period of time, it is possible for the processor 112 to generate a menu screen D42 as depicted in FIG. 23, and displays the menu screen D42 on the touch panel 118. FIG. 23 is a diagram illustrating an example of a menu screen which can be transitioned from the admission denial screen in FIG. 22.

The menu screen D42 is a screen after transitioning from the admission denial screen D41 in response to the tap operation on the message area MA41. In addition, the menu screen D42 corresponds to a screen in which button areas MB421 and MB422 are provided, instead of the button area MB12 in the menu screen D12.

The button areas MB421 and MB422 are areas for displaying menu items pertaining to any of the admission denial screen D41 and the message ME41, that is, the menu items corresponding to a state in which the admission is not granted due to not wearing the mask even though the face authentication has been passed. Moreover, the button areas MB421 and MB422 are formed as areas having respective functions as buttons available for the tap operation by the person NP. Also, the button area MB421 displays a menu item MK421 which corresponds to a phrase "Wearing the mask.". Furthermore, the button area MB422 displays a menu item MK422 corresponding to a phrase "Not possess the mask.".

For instance, in a case where the tap operation is performed on the button area MB421, the processor 112 performs a re-determination concerning whether or not the person NP is wearing the mask. Thereafter, when determining that the person NP is wearing a masking device, the processor 112 performs the process (control) in step S36. In addition, for instance, when the tap operation is performed on the button area MB422, the processor 112 generates a screen for guiding a place where the mask can be obtained near the installation location of the terminal device 100, and displays the screen on the touch panel 118.

Note that, according to the present modification, for instance, when detecting that the person NP has worn the mask while displaying the admission denial screen D41, the processor 112 may perform the process (control) in step S36 even though the tap operation has not been performed on the button area MB421.

Moreover, according to this modification, for instance, when determining that the person NP is wearing the mask, the processor 112 may display another admission permission screen D4X in which at least a part of the admission permission screen D16 is changed. Furthermore, according to the present modification, the processor 112 may display, for instance, a menu screen D4Y which can be transitioned from the admission permission screen D4X described above. In addition, according to the present modification, for instance, in a case where the processor 112 detects that a wearing state of the mask of the person NP represents an inappropriate wearing state, another admission denial screen D4P, in which at least a part of the admission denial screen D41 is changed, may be displayed. Moreover, according to the present modification, the processor 112 may display, for instance, a menu screen D4Q which can be transitioned from the admission denial screen D4P described above. That is, according to the present example embodiment, as the input acceptance screen in a state in which the face authentication of the person NP is successful, the processor 112 may generate a different screen depending on the wearing state of the mask of the person NP, and display the different screen on the touch panel 118. Furthermore, according to the present modification, the wearing state of the mask described above may indicate, for instance, one of three states: a not-wearing state, the inappropriate wearing state, and an appropriate wearing state.

### (Modification 4)

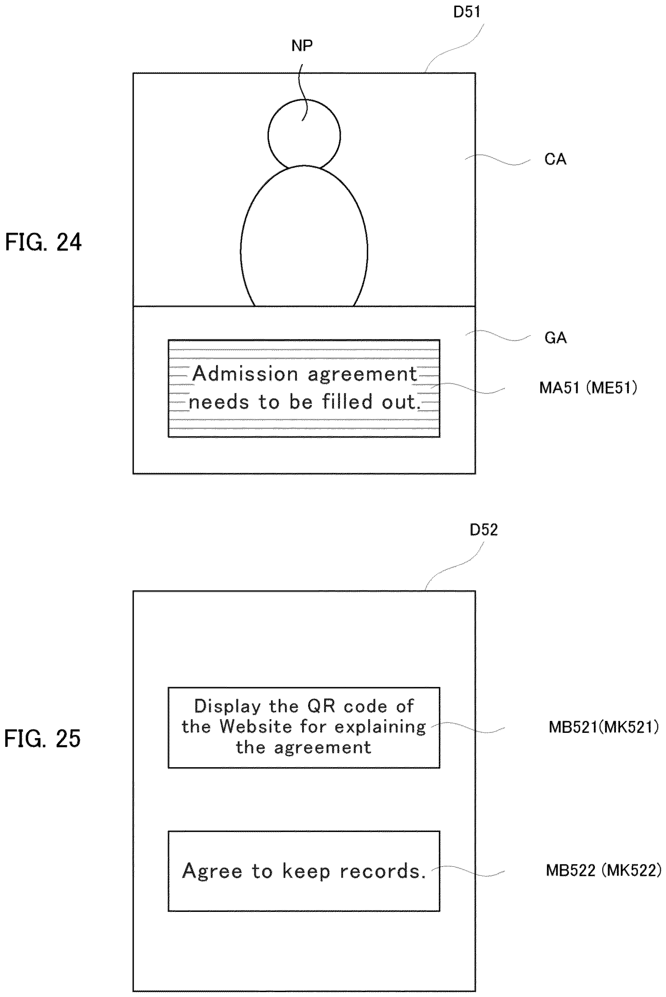

FIG. 24 is a diagram illustrating an example of the admission denial screen displayed on the terminal device.

For instance, in step S32, the processor 112 may generate an admission denial screen D51 as depicted in FIG. 24, and displays the admission denial screen D51 on the touch panel 118, instead of the admission denial screen D14, in order to require the person NP to fill out an admission agreement, which is a document listing matters to be agreed upon before the person NP enters the restricted admission area.

The admission denial screen D51 corresponds to a screen in which a message area MA51 is provided, instead of the message area MA14 of the admission denial screen D14. In other words, the admission denial screen D51 is formed as an input acceptance screen having the message area MA51.

The message area MA51 is an area for displaying a message pertaining to the entering of the restricted admission area. Also, the message area MA51 is formed as an area with a function as a button available for the tap operation by the person NP. Moreover, the message area MA51 displays the message ME51 corresponding to a phrase "Admission agreement needs to be filled out." as a message to inform the person NP that the admission agreement is necessary for the entering of the restricted admission area.

According to the screen configuration of the admission denial screen D51 as described above, for instance, in a case where the tap operation is performed on the message area MA51 within a certain period of time, the processor 112 can generate a menu screen D52 as depicted in FIG. 25, and display the menu screen D52 on the touch panel 118. FIG. 25 is a diagram illustrating an example of a menu screen which can be transitioned from the admission denial screen in FIG. 24.

The menu screen D52 is a screen after transitioning from the admission denial screen D51 in response to the tap operation on the message area MA51. Moreover, the menu screen D52 corresponds to a screen in which button areas MB521 and MB522 are provided, instead of the button area MB12 in the menu screen D12.

The button areas MB521 and MB522 are areas for displaying menu items pertaining to any of the admission denial screen D51 and the message ME51, that is, the menu items corresponding to a state in which it is not possible to enter the restricted admission area by the face authentication and confirm the presence or absence of consent by the filling out of the admission agreement. Moreover, the button areas MB521 and MB522 are formed as areas having respective functions as buttons available for the tap operation by the person NP. Furthermore, the button area MB521 displays a menu item MK521 corresponding to a phrase "Display the QR code (registered trademark) of the Website for explaining the agreement.". In addition, the button area MB522 displays a menu item MK522 corresponding to a phrase "Agree to keep records.".

Next, for instance, in a case where the tap operation is performed on the button area MB521, the processor 112 generates a screen including a statement explaining contents to fill out the admission agreement, and a QR code (registered trademark) corresponding to a URL of a Website including an input form and the like of the admission agreement, and displays the screen on the touch panel 118. Moreover, for instance, in a case where the tap operation is performed on the button area MB522, the processor 112 performs a process for transmitting the input contents of the admission agreement at the Website to the server device 200, and then performs the process (control) in step S36. The input contents of the admission agreement transmitted from the terminal device 100 to the server device 200 are stored in the database 215 in a state associated with the registration information.

Note that, according to the modification, for instance, when the tap operation is performed on the button area MB522, the processor 112 may transmit information of the body surface temperature of the person NP, which is detected by the thermal sensor 115, with the input contents of the admission agreement to the server device 200. In addition, according to the present modification, for instance, when the tap operation is performed on the button area MB522, the processor 112 may generate an authentication history according to an execution result of the face authentication of the person NP, and transmit the generated authentication history with the input contents of the admission agreement to the server device 200.

In addition, according to the present modification, for instance, when the tap operation has not been performed on the message area MA51 within the certain period of time, the processor 112 may generate an admission denial screen including the message ME31, and display the admission denial screen on the touch panel 118.

### (Modification 5)

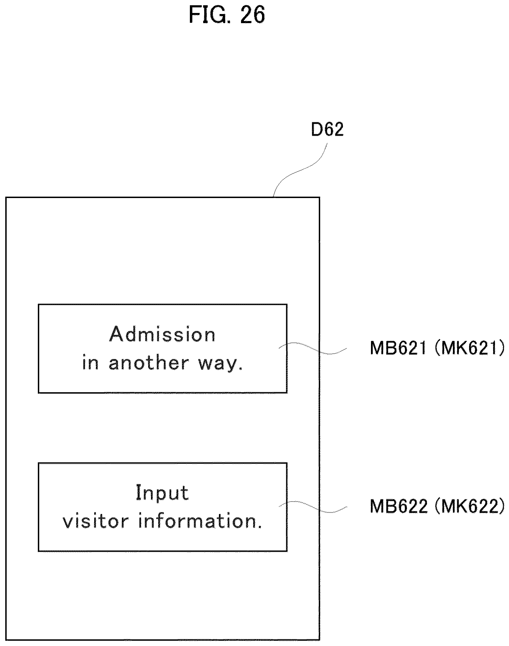

FIG. 26 is a diagram illustrating an example of a menu screen which can be transitioned from the admission denial screen in FIG. 12. In the present modification, in a case where the terminal device 100 is installed at the entrance of an apartment complex, that is, a case where an inside of the apartment complex is the restricted admission area will be described.

The processor 112 may, for instance, determine whether or not the person NP is a resident of the apartment complex based on the registered information of the person NP acquired from the server device 200 immediately after step S38.

Moreover, for instance, in step S39, instead of the menu screen D17, the processor 112 may generate a different menu screen depending on a determination result indicating whether or not the person NP is a resident of the apartment complex, and display the different menu screen on the touch panel 118. That is, the processor 112 may generate a different screen depending on the attribute of the person NP, and display the different screen on the touch panel 118 as a menu screen in a state in which the face authentication of the person NP is successful.

Furthermore, for instance, in step S33, instead of the menu screen D15, the processor 112 may generate a menu screen D62 as depicted in FIG. 26, and displays the menu screen D62 on the touch panel 118.

The menu screen D62 is a screen after transitioning from the admission denial screen D14 in response to the tap operation on the message area MA14. Moreover, the menu screen D62 corresponds to a screen in which button areas MB621 and MB622 are provided, instead of the button area MB12 in the menu screen D12.

The button areas MB621 and MB622 are areas for displaying menu items pertaining to any of the admission denial screen D14 and the message ME14, that is, the menu items depending on a state in which it is not possible to enter the admission control area by the face authentication. Moreover, the button areas MB621 and MB622 are formed as areas having respective functions as buttons available for the tap operation by the person NP. Furthermore, the button area MB621 displays a menu item MK621 corresponding to a phrase "Admission in another way.". In addition, the button area MB522 displays a menu item MK622 corresponding to a phrase "Input visitor information.".

Next, for instance, in a case where the tap operation is performed on the button area MB621, the processor 112 generates a screen including contact information of a manager of the apartment complex, and displays the screen on the touch panel 118.

Moreover, for instance, in a case where the tap operation is performed on the button area MB622, the processor 112 generates a screen for inputting the visitor information including a name of the person NP and a destination to visit, and displays the screen on the touch panel 118. Furthermore, when detecting that the input of the visitor information by the person NP has been completed, the processor 112 performs a process for transmitting the visitor information and an image obtained by capturing the face of the person NP by the camera 116 to the server device 200. After that, according to this process, the visitor information and the image concerning to the person NP are transmitted from the server device 200 to the resident of the apartment complex. Furthermore, the resident confirms the visitor information and the image, and determines whether or not to permit the person NP to enter.

### (Modification 6)

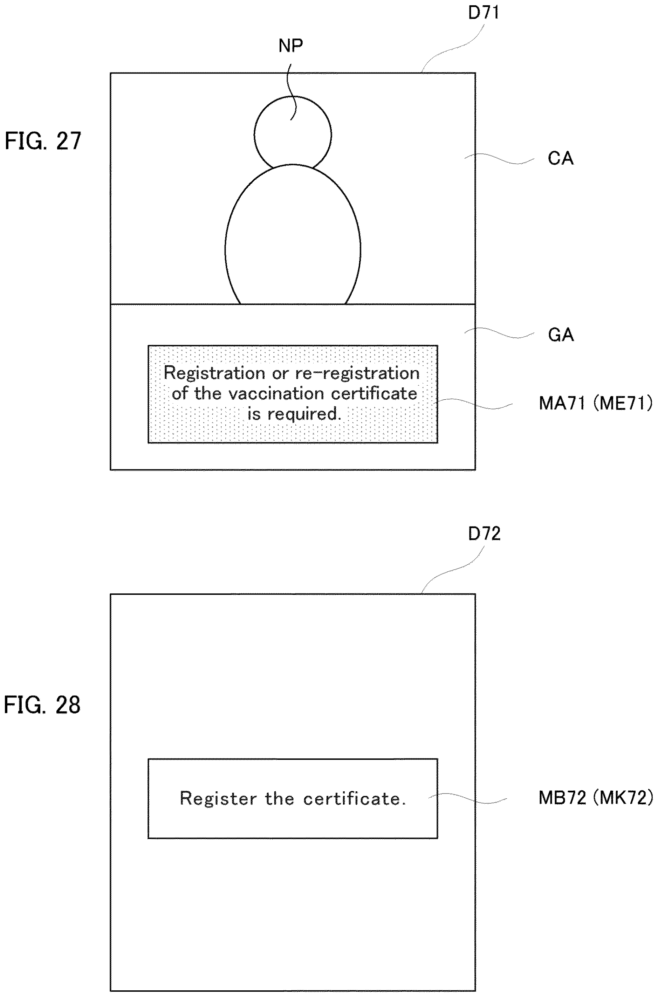

FIG. 27 is a diagram illustrating an example of an admission denial screen displayed on the terminal device.

The processor 112 may, for instance, perform a process for detecting a registration state of the vaccination certificate of the person NP, based on the registration information of the person NP acquired from the server device 200, immediately after step S31.

Moreover, for instance, when detecting that a validity period of the registered vaccination certificate (period from a current date to an expiration date) is longer than the predetermined period, the processor 112 may perform processes after step S36. In this case, by performing the process in step S37, the processor 112 can generate the admission permission screen D16 and display the admission permission screen D16 on the touch panel 118.

Moreover, for instance, when detecting that the vaccination certificate has not been registered, or when detecting that the valid period of the registered vaccination certificate is equal to or shorter than a predetermined period, instead of the admission denial screen D14, the processor 112 generates an admission denial screen D71 as depicted in FIG. 27, and displays the admission denial screen D71 on the touch panel 118.

That is, as the input acceptance screen in a state in which the face authentication for the person NP is successful, the processor 112 may generate a different screen depending on the attribute of the person NP, and display the different screen on the touch panel 118.

The admission denial screen D71 corresponds to a screen in which a message area MA71 is provided, instead of the message area MA14 of the admission denial screen D14. In other words, the admission denial screen D71 is formed as an input acceptance screen having the message area MA71.

The message area MA71 is an area for displaying messages related to the entering of the restricted admission area. Moreover, the message area MA71 is formed as an area with a function as a button available for the tap operation by the person NP. Furthermore, the message area MA71 displays a message ME71 corresponding to a phrase "Registration or re-registration of the vaccination certificate is required." as a message to urge the person NP to register or re-register the vaccination certificate.

According to the screen configuration of the admission denial screen D71 as described above, for instance, when the tap operation is performed on the message area MA71 within the predetermined time, the processor 112 may generate a menu screen D72 as depicted in FIG. 28, and displays the menu screen D72 on the touch panel 118. FIG. 28 is a diagram illustrating an example of a menu screen which can be transitioned from the admission denial screen in FIG. 27.

The menu screen D72 is a screen after transitioning from the admission denial screen D71 in response to the tap operation on the message area MA71. Moreover, the menu screen D72 corresponds to a screen in which a button area MB72 is provided, instead of the button area MB 12 on the menu screen D12.

The button area MB72 is an area for displaying a menu item related to any of the admission denial screen D71 and the message ME71, that is, the menu item corresponding to a state in which admission permission is not granted because there is a defect in the registration of the vaccination certificate despite passing the face authentication. Moreover, the button area MB72 is formed as an area having a function as a button available for the tap operation by the person NP. Furthermore, the menu item MK72 corresponding to a phrase "Register the certificate." is displayed in the button area MB72.

Next, for instance, when the tap operation is performed on the button area MB721, the processor 112 generates a screen including an QR code (registered trademark) corresponding to an URL of a Website including a registration form or the like for registering the vaccination certificate, and displays the screen on the touch panel 118.

Note that according to the modification, for instance, when detecting that the age of the person NP is equal to or less than a predetermined age, the processor 112 may skip the process for detecting the registration state of the vaccination certificate of the person NP, and perform the process after step S36. Note that the age of the person NP may be indicated in the registration information of the person NP acquired from the server device 200, or may be estimated based on images obtained by capturing the person NP with the camera 116.

### [Application Example]

In the following, an outline will be described in a case where the example embodiment described above is applied to other uses than the opening of the door or gate at the entrance leading to the entrance restriction area.

### (Application Example 1)

The above-described example embodiments can be applied to, for instance, applications of a payment at a time of purchasing an item or the like.

Specifically, when an identity verification by the face authentication is completed, the processor 112 may generate an authentication completion screen having a screen configuration substantially the same as the admission permission screen D16 in FIG. 14, and display the authentication completion screen on the touch panel 118. Moreover, when the tap operation is performed on the message area in the authentication completion screen, the processor 112 can generate a menu screen including a plurality of button areas in which one of a plurality of the payment methods registered in advance can be selected, and display the menu screen on the touch panel 118. In addition, when the tap operation is performed on the message area in the authentication completion screen described above, the processor 112 can generate a menu screen including a plurality of button areas in which one of a plurality of types of points can be selected as a point for the payment, and display the menu screen on the touch panel 118. Furthermore, when the tap operation is performed on the message area in the authentication completion screen as described above, the processor 112 can generate a menu screen including a button area for selecting whether or not to use the point or accumulate the point, and display the menu screen on the touch panel 118.

On the other hand, when the identity verification cannot be performed by the face authentication, the processor 112 can generate an authentication incomplete screen having a screen configuration substantially the same as the admission denial screen D14 in FIG. 12, and display the authentication incomplete screen on the touch panel 118. Furthermore, when the tap operation is performed on a message area on the authentication incomplete screen described above, the processor 112 may generate a menu screen including one or more button areas capable of selecting a payment method other than the payment method previously registered.

### (Application Example 2)

The example embodiments described above can be applied, for instance, to applications in which each passenger of a public transportation such as a bus decides a destination.

Specifically, when the identity verification by the face authentication is completed, the processor 112 may generate an authentication completion screen having a screen configuration substantially the same as the admission permission screen D16 in FIG. 14, and displays the authentication completion screen on the touch panel 118. Moreover, when the tap operation is performed on the message area in the authentication completion screen as described above, the processor 112 may generate a menu screen including a plurality of button areas in which one of a plurality of destination candidates can be selected as an actual destination based on a usage history of the public transportation of the passenger for whom the identity verification is performed, and display the menu screen on the touch panel 118. Note that the plurality of destination candidates may include a place, which is recorded as a previous destination of the passenger for whom the identity verification is performed, or include a place recommended as the destination of the passenger.

### <Fourth Example Embodiment>

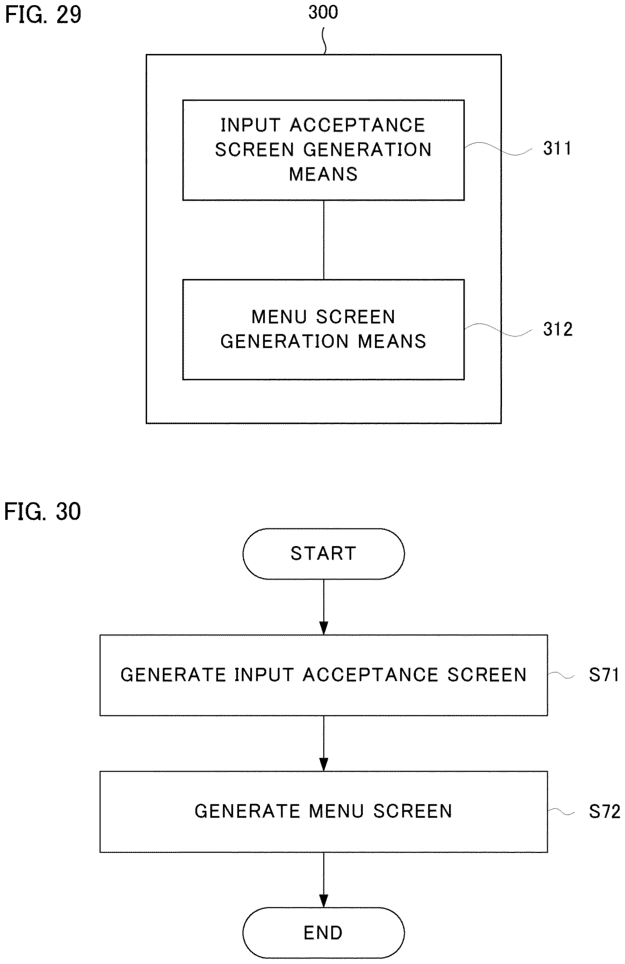

FIG. 29 is a block diagram illustrating a functional configuration of an authentication device according to a fourth example embodiment.

A terminal device 300 according to this example embodiment has a similar hardware configuration to that of the terminal device 100. Moreover, the terminal device 300 includes an input acceptance screen generation means 311 and a menu screen generation means 312.

FIG. 30 is a flowchart for explaining a process performed in the authentication device according to the fourth example embodiment.

The input acceptance screen generation means 311 generates an input acceptance screen which includes a first area for displaying a message and receives the tap operation by a target person for the face authentication in the first area or in a second area which is provided separately from the first area (step S71).

The menu screen generation means 312 generates a menu screen including one menu item or a plurality of menu items as a screen after transitioning from the input acceptance screen in response to an execution of the tap operation on the first area or the second area (step S72).

According to the present example embodiment, it is possible to provide a user interface for accessing information depending on the authentication state of the face authentication by a simple operation.

A part or all of the example embodiments described above may also be described as the following supplementary notes, but not limited thereto.

### (Supplementary note 1)

An authentication device comprising:
an input acceptance screen generation means configured to generate an input acceptance screen which includes a first area for displaying a message and receives a tap operation by a target person for a face authentication in the first area or in a second area which is provided separately from the first area; and
a menu screen generation means configured to generate a menu screen including one or more menu items as a screen after transitioning from the input acceptance screen in response to the tap operation performed to the first area or the second area.

### (Supplementary note 2)

The authentication device according to supplementary note 1, wherein
the message is a message pertaining to entering of a restricted admission area, and
the face authentication is an authentication for determining whether or not to permit the entering of the restricted admission area.

### (Supplementary note 3)

The authentication device according to supplementary note 2, wherein the input acceptance screen generation means generates the input acceptance screen in at least one of a case where the face authentication has not been performed for the target person, a case where the entering of the restricted admission area is not permitted for the target person by the face authentication, and a case where the entering of the restricted admission area is permitted for the target person by the face authentication.

### (Supplementary note 4)

The authentication device according to supplementary note 3, wherein
the input acceptance screen generation means generates a screen which includes the message for informing the target person that the entering of the restricted admission area is not permitted, as the input acceptance screen for the case where the entering of the restricted admission area is not permitted for the target person by the face authentication, and
the menu screen generation means generates a screen which includes the one or more menu items enable to perform other authentication methods which differ from the face authentication, as the menu screen after transitioning from the input acceptance screen.

### (Supplementary note 5)

The authentication device according to supplementary note 3, wherein the input acceptance screen generation means generates a screen which includes the message for urging the target person who enters the restricted admission area to wear a mask, as the input acceptance screen for the case where the entering of the restricted admission area is permitted for the target person by the face authentication and a case where the target person does not wear the mask.

### (Supplementary note 6)

The authentication device according to supplementary note 3, wherein the input acceptance screen generation means generates a screen which includes the message for informing the target person that the entering of the restricted admission area is not permitted, as the input acceptance screen in the case where the entering of the restricted admission area is permitted for the target person by the face authentication and a case where it is estimated that the target person is in a poor physical condition.

### (Supplementary note 7)

The authentication device according to supplementary note 3, wherein the input acceptance screen generation means generates a screen which includes the message for informing the target person that an admission agreement is necessary for the entering of the restricted admission area, as the input acceptance screen in the case where the entering of the restricted admission area is not permitted for the target person by the face authentication.

### (Supplementary note 8)

The authentication device according to supplementary note 1, wherein the input acceptance screen generation means generates a different screen depending on an authentication state of the face authentication for the target person, as the input acceptance screen.

### (Supplementary note 9)

The authentication device according to supplementary note 8, wherein the input acceptance screen generation means generates a different screen in accordance with whether or not the body temperature of the target person is normal, as the input acceptance screen in a state where the face authentication is successful for the target person.

### (Supplementary note 10)

The authentication device according to supplementary note 8, wherein the input acceptance screen generation means generates a different screen depending on a wearing state of the mask of the target person, as the input acceptance screen in a state where the face authentication is successful for the target person.

### (Supplementary note 11)

The authentication device according to supplementary note 8, wherein the input acceptance screen generation means generates a different screen depending on an attribute of the target person, as the input acceptance screen in a state where the face authentication is successful for the target person.

### (Supplementary note 12)

The authentication device according to supplementary note 1, wherein the menu screen generation means generates a different screen depending on an attribute of the target person, as the menu screen in a state where the face authentication is successful for the target person.

### (Supplementary note 13)

An authentication system comprising:
an authentication device according to supplementary note 2; and
a control means configured to perform a control concerning a release of the admission restriction at a predetermined entrance of the restricted admission area in a case where the entering of the restricted admission area is permitted for the target person by the face authentication.

### (Supplementary note 14)

An authentication method comprising:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

### (Supplementary note 15)

A storage medium storing a program, the program causing a computer to perform a process comprising:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

### (Supplementary note 16)

An authentication device for a face authentication of a target person, comprising:
a touch panel configured to display information concerning an authentication state of the face authentication with respect to the target person;
a thermal sensor configured to detect a body surface temperature of the target person;
a camera configured to acquire an image used for the face authentication by capturing the target person;
a speaker configured to output sound with respect to the target person;
a motion sensor configured to detect presence or absence of the target person; and
a plurality of holes configured to be used for detecting the presence or absence of the target person by the motion sensor and also outputting the sound from the speaker.

While the disclosure has been described with reference to the example embodiments and examples, the disclosure is not limited to the above example embodiments and examples. It will be understood by those of ordinary skill in the art that various changes in form and details may be made therein without departing from the spirit and scope of the present disclosure as defined by the claims.

### DESCRIPTION OF SYMBOLS

- 112, 212: Processor
- 115: Thermal sensor
- 116: Camera
- 117: Motion sensor
- 118: Touch panel
- 215: Database

## Claims

1. An authentication device comprising:
an input acceptance screen generation means configured to generate an input acceptance screen which includes a first area for displaying a message and receives a tap operation by a target person for a face authentication in the first area or in a second area which is provided separately from the first area; and
a menu screen generation means configured to generate a menu screen including one or more menu items as a screen after transitioning from the input acceptance screen in response to the tap operation performed to the first area or the second area.

2. The authentication device according to claim 1, wherein
the message is a message pertaining to entering of a restricted admission area, and
the face authentication is an authentication for determining whether or not to permit the entering of the restricted admission area.

3. The authentication device according to claim 2, wherein the input acceptance screen generation means generates the input acceptance screen in at least one of a case where the face authentication has not been performed for the target person, a case where the entering of the restricted admission area is not permitted for the target person by the face authentication, and a case where the entering of the restricted admission area is permitted for the target person by the face authentication.

4. The authentication device according to claim 3, wherein
the input acceptance screen generation means generates a screen which includes the message for informing the target person that the entering of the restricted admission area is not permitted, as the input acceptance screen for the case where the entering of the restricted admission area is not permitted for the target person by the face authentication, and
the menu screen generation means generates a screen which includes the one or more menu items enable to perform other authentication methods which differ from the face authentication, as the menu screen after transitioning from the input acceptance screen.

5. The authentication device according to claim 3, wherein the input acceptance screen generation means generates a screen which includes the message for urging the target person who enters the restricted admission area to wear a mask, as the input acceptance screen for the case where the entering of the restricted admission area is permitted for the target person by the face authentication and a case where the target person does not wear the mask.

6. The authentication device according to claim 3, wherein the input acceptance screen generation means generates a screen which includes the message for informing the target person that the entering of the restricted admission area is not permitted, as the input acceptance screen in the case where the entering of the restricted admission area is permitted for the target person by the face authentication and a case where it is estimated that the target person is in a poor physical condition.

7. The authentication device according to claim 3, wherein the input acceptance screen generation means generates a screen which includes the message for informing the target person that an admission agreement is necessary for the entering of the restricted admission area, as the input acceptance screen in the case where the entering of the restricted admission area is not permitted for the target person by the face authentication.

8. The authentication device according to claim 1, wherein the input acceptance screen generation means generates a different screen depending on an authentication state of the face authentication for the target person, as the input acceptance screen.

9. The authentication device according to claim 8, wherein the input acceptance screen generation means generates a different screen in accordance with whether or not the body temperature of the target person is normal, as the input acceptance screen in a state where the face authentication is successful for the target person.

10. The authentication device according to claim 8, wherein the input acceptance screen generation means generates a different screen depending on a wearing state of the mask of the target person, as the input acceptance screen in a state where the face authentication is successful for the target person.

11. The authentication device according to claim 8, wherein the input acceptance screen generation means generates a different screen depending on an attribute of the target person, as the input acceptance screen in a state where the face authentication is successful for the target person.

12. The authentication device according to claim 1, wherein the menu screen generation means generates a different screen depending on an attribute of the target person, as the menu screen in a state where the face authentication is successful for the target person.

13. An authentication system comprising:
an authentication device according to claim 2; and
a control means configured to perform a control concerning a release of an admission restriction at a predetermined entrance of the restricted admission area in a case where the entering of the restricted admission area is permitted for the target person by the face authentication.

14. An authentication method comprising:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

15. A storage medium storing a program, the program causing a computer to perform a process comprising:
generating an input acceptance screen which includes a first area for displaying a message and receives a tap operation by a target person for a face authentication in the first area or in a second area which is provided separately from the first area; and
generating a menu screen including one or more menu items as a screen after transitioning from the input acceptance screen in response to the tap operation performed to the first area or the second area.

16. An authentication device for a face authentication of a target person, comprising:
a touch panel configured to display information concerning an authentication state of the face authentication with respect to the target person;
a thermal sensor configured to detect a body surface temperature of the target person;
a camera configured to acquire an image used for the face authentication by capturing the target person;
a speaker configured to output sound with respect to the target person;
a motion sensor configured to detect presence or absence of the target person; and
a plurality of holes configured to be used for detecting the presence or absence of the target person by the motion sensor and also outputting the sound from the speaker.
